# EUROPÄISCHE PATENTSCHRIFT

(11) **EP 1 393 993 B1**
(45) Veröffentlichungstag und Bekanntmachung des Hinweises auf die Patenterteilung: **21.12.2005**
(21) Anmeldenummer: 03017655.6
(22) Anmeldetag: 13.08.2003
(51) Int. Cl.: B60R 21/20

(54) **Gassackmodul**
Airbag Module
Module d'airbag

(30) Priorität: 27.08.2002 DE 20213144 U
(43) Veröffentlichungstag der Anmeldung: 03.03.2004
(73) Patentinhaber: TRW Automotive Safety Systems GmbH, 63743 Aschaffenburg (DE)
(72) Erfinder: Helmstetter, Matthias, 63743 Aschaffenburg (DE); Schneider, Michael, Dr., 63843 Niedernberg (DE)
(74) Vertreter: Kitzhofer, Thomas

(56) Entgegenhaltungen:
- EP-A- 0 709 259
- DE-A- 2 644 215
- DE-A- 10 155 856
- US-A- 3 865 006

## Beschreibung

Die Erfindung betrifft ein Gassackmodul mit einem Gassack, einem Gassackhalteelement und einem Gasgeneratorträger und ein Verfahren zur Montage und Demontage eines Gassackmoduls.

Gassäcke für Fahrer und Beifahrer gehören mittlerweile in vielen Fahrzeugen zur Serienausstattung. Daher besteht ein Bedarf, derartige Gassackmodule möglichst kostengünstig zu fertigen. Ein zeitaufwendiger Arbeitsschritt ist der Zusammenbau des Moduls und hier unter anderem der Montageschritt, in dem der Gassack über ein Gassackhalteelement mit einem Gasgenerator und/oder einem Generatorträger bzw. einem Modulgehäuse verbunden wird. Diese Verbindung muß hohen Kräften standhalten, damit sich der Gassack beim Entfalten nicht aus dem Modul lösen kann. Ein bekannter, jedoch arbeitsaufwendiger Weg besteht darin, das Gassackhalteelement mit Gewindebolzen zu versehen, die mit Muttern gesichert werden.

Die gattungsgemäße DE-A-101 55 856 schlägt vor, zur Montage eines Gassackmoduls Befestigungsbolzen zu verwenden, die durch Öffnungen in einem Gassackhalteelement, einem Gasgeneratorflansch und einem Lenkradskelett hindurchgreifen. Die Rastbolzen werden von der Innenseite des Gehäuses durch die Öffnungen geschoben, bis Rasthaken am Vorderende des Rastbolzens die Rückseite des Lenkradskeletts hintergreifen.

Gemäß der EP-A-0 709 259 werden Seitenteile und Grundkörper eines Gassackmodulgehäuses mittels Schlagschrauben verbunden, die Rippen aufweisen, so daß die Schlagschrauben mit einer rotatorischen Bewegung wieder gelöst werden können.

Die Erfindung schafft eine einfache, schnelle und kostengünstige Verbindung zwischen einem Gassackhalteelement und einem Generatorträger bzw. einem Modulgehäuse.

Dies wird bei einem oben genannten Gassackmodul dadurch erreicht, daß das Gassackhalteelement am Generatorträger über wenigstens eine Schlagschraube befestigt ist. Schlagschrauben sind aus der Bautechnik bekannte Befestigungsele- mente, die Eigenschaften von Nägeln und Schrauben vereinen. Die Schlagschraube ist so ausgebildet, daß sie wie ein Nagel durch eine rein translatorische Kraft in ein Bauteil eingetrieben werden kann, sich aber dank eines eingearbeiteten Gewindes wie eine normale Schraube durch eine Rotationsbewegung aus dem Bauteil wieder entfernen läßt. Schlagschrauben bieten daher den Vorteil, daß sie sich einerseits durch eine kurzzeitige, rein axiale Krafteinwirkung schnell und sicher befestigen lassen, andererseits aber einfach wie eine Schraube wieder gelöst werden können. Die Montagezeit ist deutlich kürzer als bei einer herkömmlichen Schraubverbindung. Da am Gassackhalteelement kein Gewinde vorgesehen sein muß, verringern sich die Herstellungskosten dieses Bauteils.

In diesem Zusammenhang wird unter dem Begriff "Schlagschraube" auch ein Schraubnagel, insbesondere nach DIN 68 163 A verstanden.

Im hier verwendeten Sinn ist der Generatorträger das Bauteil, an dem der Gassack über das Gassackhalteelement festgelegt ist. Der Generatorträger kann auch als Modulgehäuse ausgebildet sein und so gleichzeitig den Gasgenerator und den Gassack aufnehmen. Der Generatorträger kann ferner direkt am Fahrzeug befestigt oder über weitere Bauteile mit dem Fahrzeug verbunden sein.

Bevorzugt bestehen das Gassackhalteelement und der Gasgeneratorträger aus Kunststoff. Die Schlagschraube kann ebenfalls aus Kunststoff oder aber aus Metall sein.

Vorteilhaft wird eine Schlagschraube eingesetzt, die ein Sägezahnprofil aufweist, welches verhindert, daß die Befestigung durch einen Zug in axialer Richtung lösbar ist. Die Schlagschraube weist außerdem ein eingearbeitetes Gewinde auf, so daß sie sich nach Art einer gewöhnlichen Schraube demontieren läßt.

In einer bevorzugten Ausführungsform der Erfindung weist das Gassackhalteelement wenigstens einen aufweitbaren, hülsenartigen Fortsatz zur Aufnahme der Schlagschraube auf, wobei der hülsenartige Fortsatz z.B. durch wenigstens einen axialen Schlitz aufweitbar ist. Der hülsenartige Fortsatz wird vorteilhaft von der Schlagschraube radial aufgespreizt, wodurch eine sichere Klemmung des hülsenartigen Fortsatzes im Generatorträger erreichbar ist.

Vorteilhaft weist der hülsenartige Fortsatz zudem eine Rastschulter auf, die in Anlage an den Generatorträger kommt. Vor allem im Zusammenhang mit dem radialen Aufspreizen des hülsenartigen Fortsatzes läßt sich so auf einfache Art eine axial wirkende formschlüssige Verbindung mit dem Generatorträger erreichen.

Bevorzugt weist eine Innenwandung des Fortsatzes wenigstens einen Wulst auf, der mit der Schlagschraube in Eingriff ist. Dieser Wulst verhindert, daß sich die Schlagschraube bei axialem Zug lösen kann.

Die vorgestellte Methode zur Verbindung des Gassackhalteelements mit dem Generatorträger läßt sich auch auf andere Verbindungen übertragen, z.B. auf Montage des Gasgeneratorträgers an einem Fahrzeug. Auch hier läßt sich der Vorteil der Schlagschraube ausnutzen, daß in kurzer Zeit eine feste Verbindung herstellbar ist, die auf einfache Weise wieder lösbar ist.

Die Erfindung schafft ferner ein einfaches Verfahren zur Montage und Demontage eines Gassackmoduls mit den in Anspruch 11 genannten Schritten. Das Verfahren ist sowohl zur Befestigung von Einzelbauteilen des Moduls als auch zur Montage des gesamten Gassackmoduls am Fahrzeug geeignet.

Weitere Merkmale und Vorteile der Erfindung ergeben sich aus der nachfolgenden Beschreibung eines Ausführungsbeispiels in Verbindung mit den beigefügten Zeichnungen. In diesen zeigen:
- Figur 1 eine schematische geschnittene Teilansicht eines erfindungsgemäßen Gassackmoduls, bei dem Bauteile mittels des erfindungsgemäßen Verfahrens aneinander befestigt werden;
- Figur 2 eine schematische perspektivische Ansicht eines Gassackhalteelements zur Verwendung in einem erfindungsgemäßen Gassackmodul;
- Figur 3 das Gassackhalteelement aus Fig. 2 von dessen Oberseite gesehen;
- Figur 4 eine Draufsicht auf das Gassackhalteelement aus Fig. 3;
- Figur 5 einen Schnitt entlang der Linie V-V in Fig. 4;
- Figur 6 einen vergrößerten Ausschnitt X aus Fig. 5, der einem Schnitt entlang der Linie VI-VI in Fig. 4 entspricht;
- Figur 7 einen Schnitt entlang der Linie VII-VII in Fig. 6;
- Figur 8 eine vergrößerte schematische Teilansicht aus Fig. 1;
- Figur 9 eine schematische Schnittansicht entlang der Linie IX-IX in Fig. 8;
- Figur 10 einen Ausschnitt eines Gassackhalteelements eines Gassackmoduls gemäß einer weiteren Ausführungsform der Erfindung;
- Figur 11 einen Schnitt durch das Gassackhalteelement aus Figur 10 entlang der Linie XI-XI; und
- Figur 12 einen Schnitt durch das Gassackhalteelement aus Figur 10 entlang der Linie XII-XII.

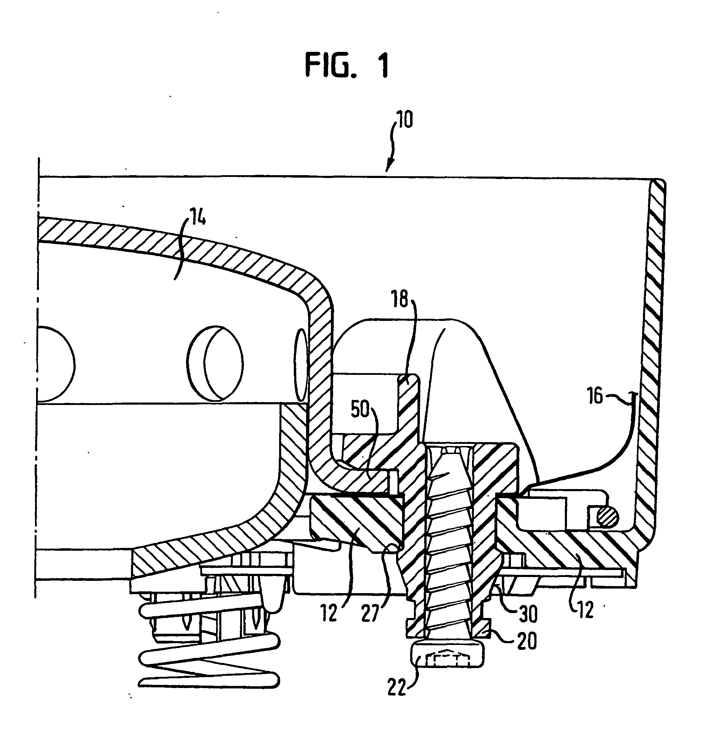

Das in Fig. 1 dargestellte Gassackmodul 10 weist einen Generatorträger 12 auf, der im hier gezeigten Beispiel als Modulgehäuse ausgebildet ist. Ein Gasgenerator 14 und ein Gassack 16 sind mit Hilfe eines Gassackhalteelements 18 am Generatorträger 12 befestigt.

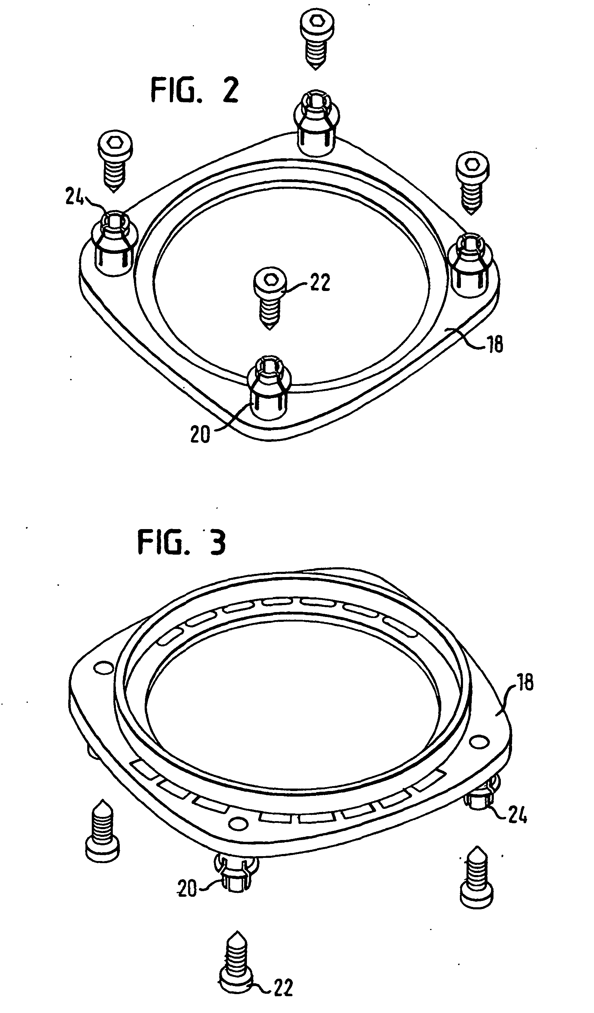

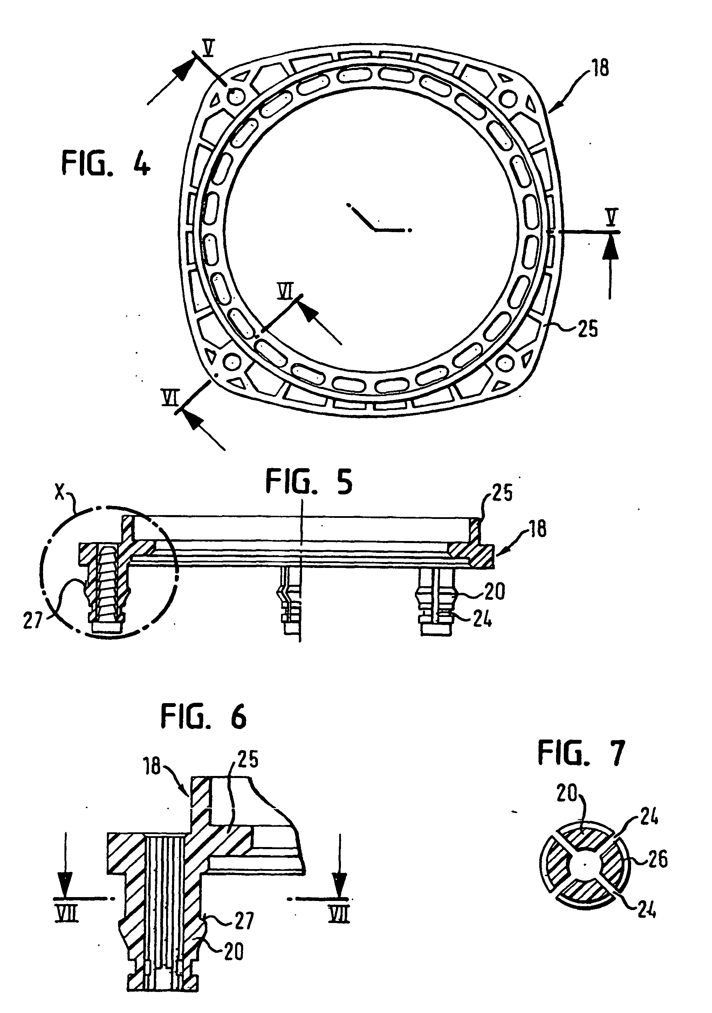

Das Gassackhalteelement 18 ist ringförmig ausgebildet und in einen Einblasmund des Gassacks 16 eingesetzt. Das Gassackhalteelement 18 weist mehrere einstückig angeformte hülsenartige Fortsätze 20 auf (siehe auch Fign. 2 bis 7), die sich durch Öffnungen im Gassack 16 und im Generatorträger 12 erstrecken. In diese hülsenartigen Fortsätze 20 sind Schlagschrauben 22 eingebracht, über die das Gassackhalteelement 18, der Gasgenerator 14, der Gassack 16 und der Generatorträger 12 fest miteinander verbunden sind.

Jede Schlagschraube 22 weist an ihrem Kopfende eine Angriffsstruktur auf, die als Vertiefung oder als Vorsprung ausgebildet sein kann. Die Angriffsstruktur erlaubt es, mit einem Werkzeug, z.B. einem Inbusschlüssel oder KreuzschlitzSchraubendreher, eine Rotationsbewegung auf die Schlagschraube 22 zu übertragen, um diese aus dem Gassackmodul 10 zu lösen.

Im folgenden wird das Gassackhalteelement 18 im Detail beschrieben. Am vom Gassackhalteelement 18 weg gerichteten Ende weist jeder hülsenartige Fortsatz 20 axiale Schlitze 24 auf. Die Schlitze 24 können sich bis zum ringförmigen Grundkörper 25 des Gassackhalteelements 18 erstrecken, so daß sich der Fortsatz 20 aus mehreren, im hier gezeigten Beispiel vier bogenförmigen Segmenten 26 zusammensetzt. An jedem Segment 26 ist außerdem eine Rastschulter 27 ausgebildet, die in Anlage an den Generatorträger 12 kommt, wenn das Gassackmodul 10 zusammengesetzt ist. Aufgrund der Schlitze 24 läßt sich die radiale Ausdehnung der hülsenartigen Fortsätze 20 verringern, so daß trotz der Rastschultern 27 ein Durchstecken der Fortsätze 20 durch die Öffnungen des Generatorträgers 12 möglich ist. Die Rastschultern 27 weisen in Einsteckrichtung wirkende Abschrägungen 30 auf, die das Durchführen der hülsenartigen Fortsätze 20 durch die Öffnungen im Generatorträger 12 erleichtern.

Beim Einbringen der Schlagschraube 22 wird der hülsenartige Fortsatz 20 in radialer Richtung leicht aufgeweitet, so daß die Rastschultern 27 den Generatorträger 12 hintergreifen und fest am Generatorträger 12 anliegen, woraus in Axialrichtung eine Formschlußverbindung und zusätzlich eine sichere Klemmverbindung zwischen den Fortsätzen 20 und dem Generatorträger 12 resultiert. Die Schlagschraube 22 wird bei der Montage durch eine rein translatorische, axiale Kraft in den Generatorträger 12 und den Fortsatz 20 eingetrieben.

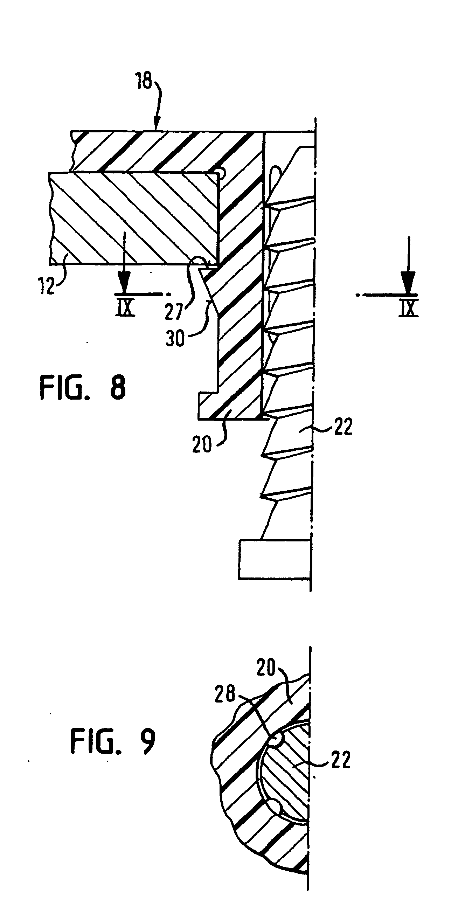

An der Innenwandung der hülsenartigen Fortsätze 20 sind Wülste 28 ausgebildet, die in axialer oder Umfangsrichtung verlaufen können (Fig. 9). Die Schlagschraube 22 weist ein Gewinde mit Sägezahnprofil auf, wie in Fig. 8 zu sehen ist. Die Wülste 28 greifen in das Sägezahnprofil ein, wodurch die Schlagschraube 22 zusätzlich gegen ein Lösen durch axialen Zug gesichert ist.

Die Wülste 28 wirken als Gegengewinde, so daß sich die Schlagschraube 22 wie eine normale Schraube lösen läßt.

Das Gassackhalteelement 18 besteht bevorzugt aus Kunststoff und kann vorteilhaft einstückig im Spritzgußverfahren hergestellt werden. Auch der Generatorträger 12 und die Schlagschraube 22 können aus einem geeigneten Kunststoff gefertigt sein, können aber auch aus Metall bestehen.

Die Montage des Gassackmoduls 10 erfolgt auf einfache Weise. Der Gasgenerator 14 wird in den Generatorträger 12 und das Gassackhalteelement 18 in den Gassack 16 eingelegt, und die hülsenartigen Fortsätze 20 des Gassackhalteelements werden durch die Öffnungen im Gassack 16 und im Generatorträger 12 gesteckt. Anschließend werden die Schlagschrauben 22 durch eine kurzzeitige axiale Krafteinwirkung in die hülsenartigen Fortsätze 20 eingetrieben. Für eine Demontage müssen lediglich die Schlagschrauben 22 aus den hülsenartigen Fortsätzen 20 herausgeschraubt werden.

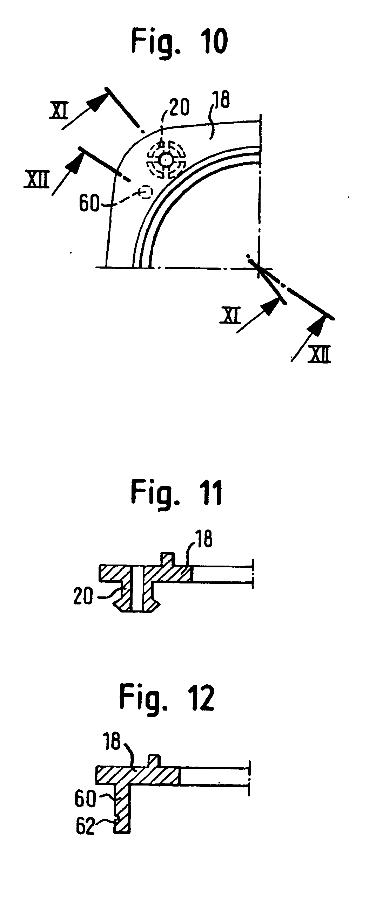

Bei der in den Figuren 10 bis 12 gezeigten Ausführungsform sind am Gassackhalteelement 18 zusätzlich zu den hülsenförmigen Fortsätzen 20 und in deren Nähe Steckstifte 60 angeformt, die sich in die selbe Richtung erstrecken wie die Fortsätze 20. Die Steckstifte 60 ragen beim Zusammenbau des Gassackmoduls durch (nicht gezeigte) entsprechende Öffnungen im Generatorträger 12 und werden durch eine geeignete, hier nicht dargestellte Vorrichtung erfaßt. Zu diesem Zweck ist an jedem Steckstift 60 eine Nut 62 vorgesehen. Durch diese Anordnung kann der beim Eintreiben der Schlagschraube 22 aufgewandten axialen Kraft entgegengewirkt und ein Auseinanderdrücken der Bauteile vermieden werden. Die Steckstifte 60 gehen keine Rastverbindung mit dem Generatorträger 12 ein. Beim Lösen der Schlagschraube 22 werden sie einfach aus dem Gassackhalteelement 18 herausgezogen.

Über ähnlich gestaltete Verbindungen kann auch das Gassackmodul 10 an einem Fahrzeug befestigt werden (nicht gezeigt).

Zu betonen ist auch, daß das Gassackhalteelement 18 durch den Flansch 50 des Gasgenerators 14 gebildet sein kann, wobei der Flansch 50 den ringförmigen Grundkörper 25 des Gassackhalteelements 18 ersetzt. Bei dieser Ausführungsform wäre es möglich, die hülsenartigen Fortsätze 20 als einzelne Kunststoffdübel auszubilden, die in Löcher am Flansch verrasten und durch die Öffnungen im Gasgeneratorträger ragen.

Die hülsenartigen Fortsätze 20 könnten statt am Gassackhalteelement auch am Generatorträger 12 vorgesehen sein und durch Öffnungen im Flansch 50 oder in einem separaten Gassackhalteelement 18 ragen, wobei die Befestigung analog zur oben beschriebenen Ausführungsform erfolgt.

## Patentansprüche

1. Gassackmodul mit einem Gassack (16), einem Gassackhalteelement (18) und einem Generatorträger (12),
**dadurch gekennzeichnet, daß** das Gassackhalteelement (18) am Generatorträger (12) über wenigstens eine Schlagschraube (22) befestigt ist.

2. Gassackmodul nach Anspruch 1, **dadurch gekennzeichnet, daß** das Gassackhalteelement (18) aus Kunststoff besteht.

3. Gassackmodul nach einem der vorhergehenden Ansprüche, **dadurch gekennzeichnet, daß** der Generatorträger (12) aus Kunststoff besteht.

4. Gassackmodul nach einem der vorhergehenden Ansprüche, **dadurch gekennzeichnet, daß** die Schlagschraube (22) aus Kunststoff besteht.

5. Gassackmodul nach einem der vorhergehenden Ansprüche, **dadurch gekennzeichnet, daß** die Schlagschraube (22) ein Sägezahnprofil aufweist.

6. Gassackmodul nach einem der vorhergehenden Ansprüche, **dadurch gekennzeichnet, daß** das Gassackhalteelement (18) wenigstens einen aufweitbaren, hülsenartigen Fortsatz (20) zur Aufnahme einer Schlagschraube (22) aufweist.

7. Gassackmodul nach Anspruch 6, **dadurch gekennzeichnet, daß** der hülsenartige Fortsatz (20) wenigstens einen axialen Schlitz (24) aufweist.

8. Gassackmodul nach einem der Ansprüche 6 und 7, **dadurch gekennzeichnet, daß** der hülsenartige Fortsatz (20) von der Schlagschraube (22) radial aufgespreizt ist.

9. Gassackmodul nach einem der Ansprüche 6 bis 8, **dadurch gekennzeichnet, daß** der hülsenartige Fortsatz (20) eine Rastschulter (27) aufweist, die am Generatorträger (12) anliegt.

10. Gassackmodul nach einem der Ansprüche 6 bis 9, **dadurch gekennzeich** **net, daß** an einer Innenwandung des Fortsatzes (20) wenigstens ein Wulst (28) ausgebildet ist, der mit der Schlagschraube (22) in Eingriff ist.

11. Verfahren zur Montage und Demontage eines Gassackmoduls, mit einem Gassack (16), einem Gassackhalteelement (18) und einem Generatorträger (12), **dadurch gekennzeichnet, daß** zur Montage des Gassackhalteelements (18) mit dem Generatorträger (12) wenigstens eine mit einem Gewinde versehene Schlagschraube (22) verwendet wird, die durch eine rein translatorische Kraft in die miteinander zu befestigende Bauteile getrieben wird und bei der Demontage durch eine rotatorische Bewegung aus den Bauteilen wieder herausgedreht wird.

## Claims

1. A gas bag module comprising a gas bag (16), a gas bag holding element (18) and a generator carrier (12),
**characterized in that** the gas bag holding element (18) is fastened to the generator carrier (12) by means of at least one drive-in screw (22).

2. The gas bag module according to Claim 1, **characterized in that** the gas bag holding element (18) consists of plastic.

3. The gas bag module according to either of the preceding claims, **characterized in that** the generator carrier (12) consists of plastic.

4. The gas bag module according to any of the preceding claims, **characterized in that** the drive-in screw (22) consists of plastic.

5. The gas bag module according to any of the preceding claims, **characterized in that** the drive-in screw (22) has a sawtooth profile.

6. The gas bag module according to any of the preceding claims, **characterized in that** the gas bag holding element (18) has at least one expandable sleeve-like extension (20) to receive a drive-in screw (22).

7. The gas bag module according to Claim 6, **characterized in that** the sleeve-like extension (20) has at least one axial slit (24).

8. The gas bag module according to either of Claims 6 and 7, **characterized in that** the sleeve-like extension (20) is radially spread apart by the drive-in screw (22).

9. The gas bag module according to any of Claims 6 to 8, **characterized in that** the sleeve-like extension (20) has a detent shoulder (27) which lies against the generator carrier (12).

10. The gas bag module according to any of Claims 6 to 9, **characterized in that** at least one bead (28) which is in engagement with the drive-in screw (22) is formed on an inner wall of the extension (20).

11. A method of assembling and disassembling a gas bag module, the gas bag module comprising a gas bag (16), a gas bag holding element (18) and a generator carrier (12), **characterized in that** for assembling the gas bag holding element (18) with the generator carrier (12) at least one drive-in screw (22) is used which is provided with a thread and which is driven by a purely translational force into the components to be fastened to each other, and during disassembly is unscrewed out of the components by a rotational movement.

## Revendications

1. Module de coussin à gaz, comportant un coussin à gaz (16), un élément de retenue de coussin à gaz (18) et un support de générateur de gaz (12),
**caractérisé en ce que** l'élément de retenue coussin à gaz (18) est fixé sur le support de générateur de gaz (12) par au moins une vis à frapper (22).

2. Module de coussin à gaz selon la revendication 1, **caractérisé en ce que** l'élément de retenue de coussin à gaz (18) est en matière plastique.

3. Module de coussin à gaz selon l'une des revendications précédentes, **caractérisé en ce que** le support de générateur de gaz (12) est en matière plastique.

4. Module de coussin à gaz selon l'une des revendications précédentes, **caractérisé en ce que** la vis à frapper (22) est en matière plastique.

5. Module de coussin à gaz selon l'une des revendications précédentes, **caractérisé en ce que** la vis à frapper (22) présente un profil en dents de scie.

6. Module de coussin à gaz selon l'une des revendications précédentes, **caractérisé en ce que** l'élément de retenue de coussin à gaz (18) présente au moins un prolongement (20) expansible en forme de douille pour recevoir une vis à frapper (22).

7. Module de coussin à gaz selon la revendication 6, **caractérisé en ce que** le prolongement (20) en forme de douille présente au moins une fente (24) axiale.

8. Module de coussin à gaz selon l'une des revendications 6 et 7, **caractérisé en ce que** le prolongement (20) en forme de douille est écarté radialement par la vis à frapper (22).

9. Module de coussin à gaz selon l'une des revendications 6 à 8, **caractérisé en ce que** le prolongement (20) en forme de douille présente un épaulement d'enclenchement (27) qui est en appui sur le support de générateur de gaz (12).

10. Module de coussin à gaz selon l'une des revendications 6 à 9, **caractérisé en ce que** sur la paroi intérieure du prolongement (20) est réalisé au moins un bourrelet (28) qui est en engagement avec la vis à frapper (22).

11. Procédé de montage et de démontage d'un module de coussin à gaz, comportant un coussin à gaz (16), un élément de retenue de coussin à gaz (18) et un support de générateur de gaz (12), **caractérisé en ce que** pour le montage de l'élément de retenue de coussin à gaz (18) avec le support de générateur de gaz (12), on utilise au moins une vis à frapper (22) pourvu d'un filetage, qui est enfoncé dans les composants à fixer l'un à l'autre par pure force de translation et qui, lors du démontage, est de nouveau dévissé hors des composants par un mouvement de rotation.
